# EUROPÄISCHE PATENTSCHRIFT

(11) **EP 3 299 242 B1**
(45) Veröffentlichungstag und Bekanntmachung des Hinweises auf die Patenterteilung: **25.09.2019**
(21) Anmeldenummer: 17179160.1
(22) Anmeldetag: 30.06.2017
(51) Int. Cl.: B60W 50/08

(54) **PISTENRAUPE**
PISTE CATERPILLAR
DAMEUR DE PISTE

(30) Priorität: 20.09.2016 DE 102016218035
(43) Veröffentlichungstag der Anmeldung: 28.03.2018
(73) Patentinhaber: Kässbohrer Geländefahrzeug AG, 88471 Laupheim (DE)
(72) Erfinder: Betz, Peter, 88471 Baustetten (DE); Frankenhauser, Klaus, 88487 Baltringen (DE); Luigart, Christof, 89155 Erbach (DE); Mayer, Reinhold, 89134 Blaustein-Bermaringen (DE); Wiedmann, Markus, 88477 Schönebürg (DE)
(74) Vertreter: Patentanwälte Ruff, Wilhelm, Beier, Dauster & Partner mbB

(56) Entgegenhaltungen:
- EP-A1- 2 406 478
- DE-A1- 19 849 715
- DE-A1-102004 060 160
- DE-A1-102008 053 743

## Beschreibung

Die Erfindung betrifft eine Pistenraupe mit einer Fahrerkabine, die einen Fahrersitzplatz aufweist, dem eine Lenkeinheit sowie in einem Fußraum der Fahrerkabine ein Fahrpedal zur Steuerung einer Fahrgeschwindigkeit des Kettenfahrwerks zugeordnet sind, und mit einer Vorrichtung zur automatischen Regelung der Fahrgeschwindigkeit, die wenigstens ein von dem Fahrersitzplatz aus bedienbares Steuerelement zum Verändern von Soll-Werten für die durch die Vorrichtung vorgegebene Fahrgeschwindigkeit sowie zum Aktivieren oder Deaktivieren der Vorrichtung aufweist.

Eine derartige Pistenraupe ist aus der EP 1 467 340 A1 bekannt. Die bekannte Pistenraupe kann einen Tempomaten aufweisen, der eine Fahrgeschwindigkeit der Pistenraupe fest einstellt.

Die EP 2 406 478 B1 offenbart eine weitere Pistenraupe, die eine elektronische Ansteuerung eines Fahrantriebs über entsprechende Lenkbewegungen einer Lenkeinheit und entsprechende Verlagerungen eines Fahrpedals ermöglicht.

Aufgabe der Erfindung ist es, eine Pistenraupe der eingangs genannten Art zu schaffen, die trotz des Vorsehens einer Vorrichtung zur automatischen Regelung der Fahrgeschwindigkeit eine hohe Sicherheit für einen Fahrer der Pistenraupe bietet.

Diese Aufgabe wird dadurch gelöst, dass in dem Fußraum ein zu dem Fahrpedal benachbartes Notpedal angeordnet ist, das mit der Vorrichtung zur automatischen Regelung der Fahrgeschwindigkeit derart gekoppelt ist, dass ein Betätigen des Notpedals ein Deaktivieren der Vorrichtung bewirkt. Die erfindungsgemäße Lösung ermöglicht ein besonders intuitives Deaktivieren der Vorrichtung zur automatischen Regelung der Fahrgeschwindigkeit, indem ein entsprechendes Notpedal vorgesehen ist, das in dem Fußraum benachbart zu dem Fahrpedal positioniert ist. Die erfindungsgemäße Lösung nutzt intuitive Bewegungen eines Fahrers in einer Notsituation. Denn in einer Notsituation, in der der Fahrer in Panik gerät, drückt der Fahrer intuitiv Beine und Arme als Abwehrreaktion nach vorne durch. Dem Fahrer ist zudem bei Personenkraftwagen das Bremspedal bekannt, das sich neben dem Gaspedal befindet. In einem Personenkraftwagen drückt ein Fahrer in einer Notsituation intuitiv auf das Bremspedal. Dieses dem Fahrer bei Personenkraftwagen oder anderen Radfahrzeugen geläufige Verhalten nutzt die erfindungsgemäße Lösung bei der vorliegenden erfindungsgemäßen Pistenraupe, indem im Fußraum neben dem Fahrpedal noch ein Notpedal positioniert ist, das ausschließlich zur Deaktivierung der Vorrichtung zur automatischen Regelung der Fahrgeschwindigkeit vorgesehen ist. Eine Pistenraupe hat grundsätzlich nur ein einzelnes Pedal im Fußraum, nämlich ein Fahrpedal, das sowohl zum Beschleunigen als auch zum Bremsen oder zum Halten der Geschwindigkeit der Pistenraupe dient. Denn aufgrund eines üblicherweise hydraulischen Fahrantriebs für ein entsprechendes Kettenfahrwerk der Pistenraupe übernimmt sowohl das Beschleunigen als auch das Bremsen bis zum Stillstand ein hydraulischer Radantrieb, der direkt mit jeweils einem entsprechenden Turasrad der beiden Kettenseiten des Kettenfahrwerks gekoppelt ist. Die erfindungsgemäße Lösung ermöglicht einem Fahrer der Pistenraupe auch in Paniksituationen intuitiv ein Deaktivieren der Vorrichtung zur automatischen Regelung der Fahrgeschwindigkeit, wodurch in einer entsprechenden Notsituation ein sofortiges Abstoppen der Pistenraupe erzielbar ist. Hierdurch kann die Sicherheit der Pistenraupe und auch die Sicherheit eines Fahrers der Pistenraupe gegenüber bekannten Pistenraupen erheblich erhöht werden.

In Ausgestaltung der Erfindung weist das Notpedal eine bewegliche Pedaltaste sowie eine elektrische und/oder elektronische Steuereinrichtung auf, die durch eine Bewegung der Pedaltaste steuerbar ist. Das Notpedal ist demzufolge ausschließlich elektrisch und/oder elektronisch mit der Vorrichtung zur automatischen Regelung der Fahrgeschwindigkeit verbunden.

In weiterer Ausgestaltung der Erfindung ist die Steuereinrichtung in einem Trägergehäuse integriert, an dem die bewegliche Pedaltaste gelagert ist. Dadurch können die Pedaltaste und die Steuereinrichtung am Trägergehäuse vormontiert werden.

In weiterer Ausgestaltung der Erfindung ist an einer Lenksäulenkonstruktion der Lenkeinheit ein Halter vorgesehen, an dem das Trägergehäuse befestigt ist. Diese Ausgestaltung ermöglicht eine besonders funktionssichere Unterbringung des Notpedals im Fußraum der Fahrerkabine. Zudem kann die Lenksäulenkonstruktion gemeinsam mit dem Trägergehäuse vormontiert werden, wodurch sich eine vereinfache Montage innerhalb der Fahrerkabine erreichen lässt.

In weiterer Ausgestaltung der Erfindung ist die elektrische und/oder elektronische Steuereinrichtung mit der Vorrichtung zur automatischen Regelung der Fahrgeschwindigkeit über wenigstens eine Datenleitung verbunden. Die wenigstens eine Datenleitung kann Teil eines Kabelsystems oder eines Bussystems sein.

In weiterer Ausgestaltung der Erfindung ist die Steuereinrichtung über die wenigstens eine Datenleitung mit einem Deaktivierungsmodul der Vorrichtung zur automatischen Regelung der Fahrgeschwindigkeit verbunden. Das Deaktivierungsmodul bildet einen Aus-Schalter für die Vorrichtung, der bei Betätigung die Vorrichtung vorzugsweise ohne zeitliche Verzögerung deaktiviert und demzufolge abschaltet. Falls die Pistenraupe mit einer entsprechend eingestellten Geschwindigkeit automatisch bewegt wird, bewirkt eine Betätigung des Notpedals zwangsläufig eine sofortige Stillsetzung des Fahrantriebs der Pistenraupe. Die Pistenraupe bleibt sofort stehen. Hierdurch kann der Fahrer der Pistenraupe verhindern, dass die Pistenraupe in eine nicht kontrollierbare Notsituation gerät.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform einer erfindungsgemäßen Pistenraupe,
- Fig. 2: schematisch in perspektivischer Darstellung eine Ansicht eines Innenraums einer Fahrerkabine der Pistenraupe nach Fig. 1 mit einem Fahrpedal und einem Notpedal in einem Fußraum und
- Fig. 3: schematisch eine Lenksäulenkonstruktion der Pistenraupe nach den Fig. 1 und 2 mit einem Blockschaltbild, das eine Funktion einer Vorrichtung zur automatischen Regelung der Fahrgeschwindigkeit der Pistenraupe nach den Fig. 1 und 2 wie auch eine Funktion eines Notpedals zur Deaktivierung der Vorrichtung zeigt.

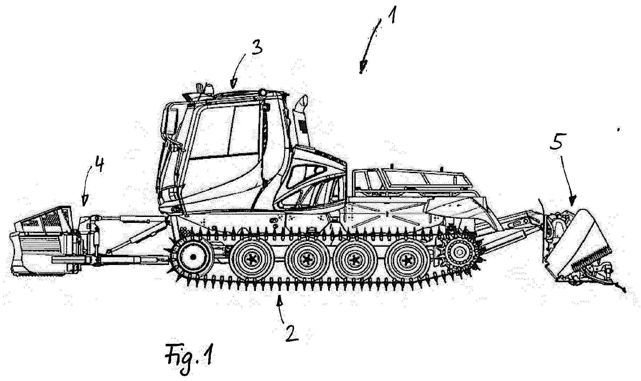

Ein Kettenfahrzeug in Form einer Pistenraupe 1 weist gemäß Fig. 1 ein Kettenfahrwerk 2 auf. Das Kettenfahrwerk 2 weist auf gegenüberliegenden Seiten eines Fahrzeugrahmens der Pistenraupe 1 jeweils eine Kettenseite auf, die durch eine umlaufende Kette, ein frontseitiges Spannrad, vier Laufräder sowie ein heckseitiges Antriebsrad gebildet ist, das auch als Turasrad bezeichnet wird. Jedes Antriebsrad der beiden Kettenseiten wird durch jeweils einen Hydraulikmotor angetrieben, die über ein Hydrauliksystem angesteuert werden. Das Hydrauliksystem weist eine hydraulische Verstellpumpe auf, die durch einen zentralen Verbrennungsmotor in Form eines Dieselmotors angetrieben wird.

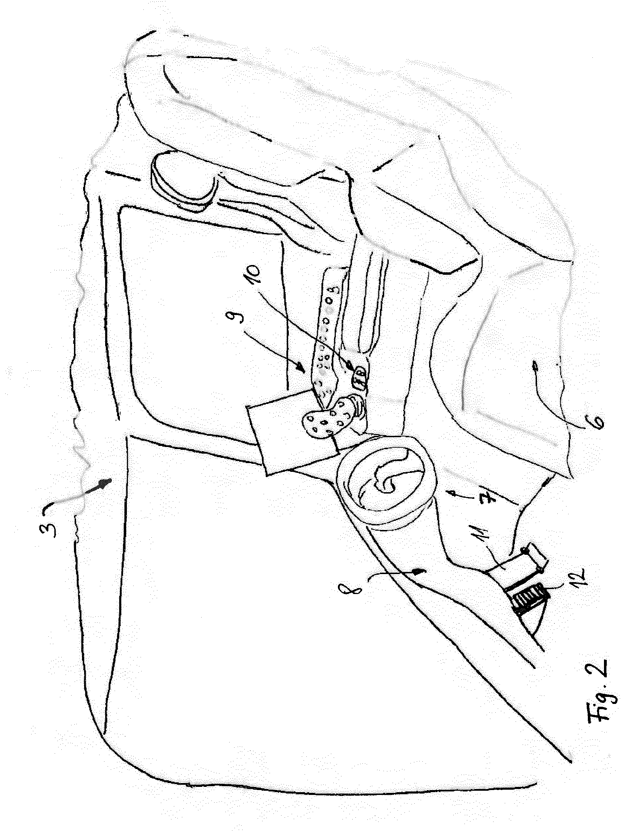

Der Fahrwerksrahmen der Pistenraupe 1 trägt in einer vorderen Hälfte eine Fahrerkabine 3. An dem Fahrwerksrahmen ist frontseitig ein Fronträumschild 4 und heckseitig eine Heckfräse 5 angeordnet. In der Fahrerkabine 3 ist gemäß Fig. 2 ein Fahrersitzplatz 6 vorgesehen, dem rechts - in Fahrtrichtung gesehen - ein Bedienpult 9 und frontseitig ein Lenkrad 7 einer Lenkeinheit zugeordnet ist. Das Lenkrad 7 wird von einer Lenksäulenkonstruktion 8 getragen, die aus einem Fußraum der Fahrerkabine heraus schräg nach oben und zum Fahrersitzplatz 6 hin abragt. In dem Fußraum der Fahrerkabine 3 ist ein Fahrpedal 11 angeordnet, das die Fahrgeschwindigkeit des Kettenfahrwerks 2 steuert, indem das Fahrpedal 11 die beiden Turasräder der beiden Kettenseiten des Kettenfahrwerks 2 steuert. Das Lenkrad 7 der Lenkeinheit steuert ebenfalls die beiden Kettenseiten an, um Lenkbewegungen der Pistenraupe 1 erzielen zu können. In einer Neutralstellung des Lenkrads 7 werden beide Kettenseiten gleichmäßig angetrieben. Bei einer Auslenkbewegung des Lenkrads 7 nach links oder nach rechts werden die gegenüberliegenden Turasräder der Kettenseiten unterschiedlich angetrieben, wodurch sich unterschiedliche Kettengeschwindigkeiten der beiden Kettenseiten ergeben, die zu gewünschten Lenkbewegungen führen. Bei Volleinschlag des Lenkrads 7 wird ein gegensinniger Lauf der beiden Kettenseiten erzielt, wodurch ein Drehen der Pistenraupe 1 um eine Hochachse auf der Stelle erzielbar ist.

Dem Bedienpult ist ein Steuerelement 10 zugeordnet, das zwei Tasten 15 und 16 aufweist, die einer Vorrichtung T zum automatischen Regeln der Fahrgeschwindigkeit der Pistenraupe 1 zugeordnet sind. Die beiden Tasten 15 und 16 sind elektrisch oder elektronisch wirksame Bedienelemente, die Soll-Werte für eine Fahrgeschwindigkeit vorgeben abhängig von einer Bedienung durch den Fahrer der Pistenraupe 1, der auf dem Fahrersitzplatz 6 sitzt. Die Tasten 15 und 16 sind über eine als Datenleitung S₁ gestaltete Steuerleitung mit einer Steuerelektronik der Vorrichtung T zum automatischen Regeln der Fahrgeschwindigkeit verbunden.

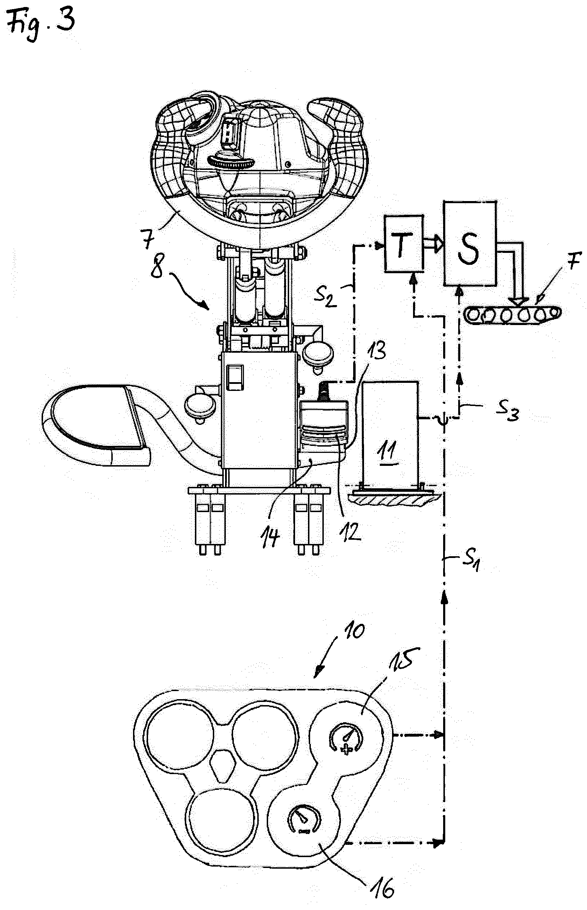

Anhand der Fig. 3 ist zudem erkennbar, dass das Fahrpedal 11 über eine weitere Datenleitung S₃ in Form einer Steuerleitung mit einer zentralen Steuereinheit S verbunden ist, mittels der entsprechende Steuerbefehle an einen Fahrantrieb F des Kettenfahrwerks 2 übermittelt werden. Der Fahrantrieb F erhält elektronische Steuersignale und wandelt diese in entsprechende hydraulische Stellsignale zur Ansteuerung der Hydraulikmotoren im Bereich der Turasräder um.

Im Betrieb der Vorrichtung zur automatischen Regelung der Fahrgeschwindigkeit, die auch als Tempomat bezeichnet wird, wird eine entsprechende Soll-Geschwindigkeit-Vorgabe berechnet durch Auswertung der über die Tasten 15 und 16 übermittelten Signale. Diese Signale umfassen ein Ein- und Ausschalten der Vorrichtung wie auch eine Erhöhung oder eine Reduzierung der Soll-Geschwindigkeit. Durch diese Vorrichtung T kann die Pistenraupe 1 mit konstanter Geschwindigkeit gefahren werden, ohne dass der Fahrer das Fahrpedal 11 betätigt. Während einer Fahrt kann die Vorrichtung durch Drücken einer entsprechenden Taste 15, 16 aktiviert werden. Eine aktuelle Soll-Geschwindigkeit wird gespeichert. Über entsprechende Ansteuerung der Tasten 15 und 16 kann die Soll-Geschwindigkeit erhöht oder reduziert werden. Grundsätzlich kann die Soll-Geschwindigkeit auch durch Betätigen des Fahrpedals 11 erhöht werden. Hierzu ist das Fahrpedal 11 in nicht dargestellter Weise auch über eine entsprechende Steuerleitung mit der Vorrichtung T verbunden. Durch entsprechende Bedienung der Tasten im Bereich des Stellelements 10 kann die Vorrichtung T bei Bedarf durch den Fahrer auch deaktiviert werden.

Die Vorrichtung T ist mit der zentralen Steuereinheit S gekoppelt, um entsprechende Soll-Werte zur Einstellung der Fahrgeschwindigkeit an die Steuereinheit S zu übertragen, die dann entsprechende Steuerbefehle abhängig von einem Vergleich mit der jeweiligen Ist-Geschwindigkeit an den Fahrantrieb F weiterleitet.

Für den Fall, dass der Fahrer in einer Paniksituation oder aus anderen Gründen durch Bedienung entsprechender Stellelemente im Bereich des Bedienpults 9 die Vorrichtung T nicht deaktivieren kann, ist der Vorrichtung T zusätzlich im Fußraum der Fahrerkabine 3 noch ein Notpedal 12 zugeordnet, das über eine elektronische Datenleitung S₂ in Form einer Steuerleitung mit einem Deaktivierungsmodul der Vorrichtung T gekoppelt ist. Das Notpedal 12 ist links neben dem Fahrpedal 11 angeordnet, in Blickrichtung des Fahrers auf den Fußraum gesehen. Eine Betätigung des Notpedals 12 führt zu einem sofortigen Abschalten der Vorrichtung T. Das Notpedal 12 weist eine bewegliche Pedaltaste auf, die an einem Trägergehäuse 13 gelagert ist. In dem Trägergehäuse 13 ist eine entsprechende elektrische und/oder elektronische Steuereinrichtung vorgesehen, die über die Datenleitung S₂ mit der Vorrichtung T gekoppelt ist. Das Trägergehäuse 13 einschließlich der Pedaltaste ist auf einem Halter 14 befestigt, der fest an der Lenksäulenkonstruktion 8 der Lenkeinheit angeordnet ist. Die Lenksäulenkonstruktion 8 ist mit verschiedenen Verstellmechanismen versehen, um die Position des Lenkrads 7 relativ zur Fahrersitzposition 6 in unterschiedlichen Richtungen einstellen zu können. Hierzu ist die Lenksäulenkonstruktion 8 mit nicht näher bezeichneten Verstellpedalen versehen, die durch den Fahrer bedienbar sind, um eine gewünschte Verstellung der Lenksäulenkonstruktion 8 zu ermöglichen.

## Patentansprüche

1. Pistenraupe (1) mit einer Fahrerkabine (3), die einen Fahrersitzplatz (6) aufweist, dem eine Lenkeinheit sowie in einem Fußraum der Fahrerkabine (3) ein Fahrpedal (11) zur Steuerung einer Fahrgeschwindigkeit eines Kettenfahrwerks (2) zugeordnet sind, und mit einer Vorrichtung (T) zur automatischen Regelung der Fahrgeschwindigkeit, die wenigstens ein von dem Fahrersitzplatz (6) aus bedienbares Steuerelement (10) zum Verändern von Soll-Werten für die durch die Vorrichtung (T) vorgegebene Fahrgeschwindigkeit sowie zum Aktivieren oder Deaktivieren der Vorrichtung (T) aufweist, **dadurch gekennzeichnet, dass** in dem Fußraum ein zu dem Fahrpedal (11) benachbartes Notpedal (12) angeordnet ist, das mit der Vorrichtung (T) zur automatischen Regelung der Fahrgeschwindigkeit derart gekoppelt ist, dass ein Betätigen des Notpedals (12) ein Deaktivieren der Vorrichtung (T) bewirkt.

2. Pistenraupe nach Anspruch 1, **dadurch gekennzeichnet, dass** das Notpedal (12) eine bewegliche Pedaltaste sowie eine elektrische und/oder elektronische Steuereinrichtung aufweist, die durch eine Bewegung der Pedaltaste steuerbar ist.

3. Pistenraupe nach Anspruch 2, **dadurch gekennzeichnet, dass** die Steuereinrichtung in einem Trägergehäuse (13) integriert ist, an dem die bewegliche Pedaltaste gelagert ist.

4. Pistenraupe nach Anspruch 3, **dadurch gekennzeichnet, dass** an einer Lenksäulenkonstruktion (8) der Lenkeinheit ein Halter (14) vorgesehen ist, an dem das Trägergehäuse (13) befestigt ist.

5. Pistenraupe nach Anspruch 2, **dadurch gekennzeichnet, dass** die elektrische und/oder elektronische Steuereinrichtung mit der Vorrichtung (T) zur automatischen Regelung der Fahrgeschwindigkeit über wenigstens eine Datenleitung (S₂) verbunden ist.

6. Pistenraupe nach Anspruch 5, **dadurch gekennzeichnet, dass** die Steuereinrichtung über die wenigstens eine Datenleitung (S₂) mit einem Deaktivierungsmodul der Vorrichtung (T) zur automatischen Regelung der Fahrgeschwindigkeit verbunden ist.

## Claims

1. Tracked piste grooming vehicle (1) having a driver cabin (3) which has a driver seat (6) with associated thereto a steering unit and an accelerator pedal (11) in a footwell of the driver cabin (3) for controlling a driving speed of a tracked chassis (2), and having a device (T) for automatic control of the driving speed, including at least one control element (10) operatable from the driver seat (6) for varying set values for the driving speed predetermined by the device (T) and for activating or deactivating the device (T), **characterized in that** in the footwell an emergency pedal (12) is arranged adjacent to the accelerator pedal (11), which emergency pedal (12) is coupled to the device (T) for automatic control of the driving speed such that operating the emergency pedal (12) causes deactivating of the device (T).

2. Tracked piste grooming vehicle according to claim 1, **characterized in that** the emergency pedal (12) includes a moveable pedal key and an electric and/or electronic control apparatus which is controllable by a movement of the pedal key.

3. Tracked piste grooming vehicle according to claim 2, **characterized in that** the control apparatus is integrated in a carrier housing (13) on which the moveable pedal key is mounted.

4. Tracked piste grooming vehicle according to claim 3, **characterized in that** a holder (14) is provided on a steering column structure (8) of the steering unit, on which holder the carrier housing (13) is fixed.

5. Tracked piste grooming vehicle according to claim 2, **characterized in that** the electric and/or electronic control apparatus is connected to the device (T) for automatic control of the driving speed via at least one data line (S₂).

6. Tracked piste grooming vehicle according to claim 5, **characterized in that** the control apparatus is connected to a deactivation module of the device (T) for automatic control of the driving speed via the at least one data line (S₂).

## Revendications

1. Véhicule chenillé (dameuse) de piste (1) avec une cabine du conducteur (3) comprenant un siège du conducteur (6) auquel sont associés une unité de direction ainsi que, dans un espace des pieds de la cabine du conducteur (3), une pédale d'accélérateur (11) pour commander une vitesse de conduite d'un châssis à chenilles (2), et avec un dispositif (T) pour le réglage automatique de la vitesse de conduite, comportant au moins un élément de commande (10) actionnable à partir du siège du conducteur (6) pour changer des valeurs de consigne de la vitesse de conduite prédéfinie par le dispositif (T) ainsi que pour activer ou désactiver le dispositif (T), **caractérisé en ce que** une pédale de secours (12) est arrangée dans l'espace des pieds avoisinante à la pédale d'accélérateur (11) et couplée au dispositif (T) pour le réglage automatique de la vitesse de conduite de telle manière qu'un actionnement de la pédale de secours (12) provoque une désactivation du dispositif (T).

2. Véhicule chenillé de piste selon la revendication 1, **caractérisé en ce que** la pédale de secours (12) présente un manipulateur de pédale mobile ainsi qu'un appareil de commande électrique et/ou électronique commandable par un mouvement du manipulateur de pédale.

3. Véhicule chenillé de piste selon la revendication 2, **caractérisé en ce que** l'appareil de commande est intégré dans un boîtier de support (13) sur lequel le manipulateur de pédale mobile est monté.

4. Véhicule chenillé de piste selon la revendication 3, **caractérisé en ce qu'**un porteur (14) est prévu sur une construction de colonne de direction (8) de l'unité de direction, sur lequel porteur le boîtier de support (13) est fixé.

5. Véhicule chenillé de piste selon la revendication 2, **caractérisé en ce que** l'appareil de commande électrique et/ou électronique est raccordé au dispositif (T) pour le réglage automatique de la vitesse de conduite par le biais d'au moins une ligne de données (S₂).

6. Véhicule chenillé de piste selon la revendication 5, **caractérisé en ce que** l'appareil de commande est raccordé par le biais de l'au moins une ligne de données (S₂) à un module de désactivation du dispositif (T) pour le réglage automatique de la vitesse de conduite.
